# EUROPEAN PATENT SPECIFICATION

(11) **EP 3 166 354 B1**
(45) Date of publication and mention of the grant of the patent: **31.03.2021**
(21) Application number: 16194710.6
(22) Date of filing: 20.10.2016
(51) Int. Cl.: H04W 24/02

(54) **COVERAGE ENHANCEMENT MODE CHANGE FOR ENHANCED COVERAGE USER EQUIPMENT**
ABDECKUNGSVERSTÄRKUNGSMODUSÄNDERUNG FÜR EINE BENUTZERAUSRÜSTUNG MIT VERBESSERTER ABDECKUNG
CHANGEMENT DE MODE D'AMÉLIORATION DE COUVERTURE POUR UN ÉQUIPEMENT UTILISATEUR DE COUVERTURE AMÉLIORÉE

(30) Priority: 05.11.2015 US 201562251478 P
(43) Date of publication of application: 10.05.2017
(73) Proprietor: Nokia Technologies Oy, 02610 Espoo (FI)
(72) Inventor: LI, Haitao, Beijing, 100102 (CN); ZHANG, Yanji, Beijing, 100029 (CN); KOSKINEN, Jussi-Pekka, 90420 Oulu (FI); SEBIRE, Benoist, Tokyo, 162-0825 (JP)
(74) Representative: Ruuskanen, Juha-Pekka

(56) References cited:
- EP-A1- 2 903 195
- WO-A1-2014/204285
- WO-A1-2015/113228
- WO-A1-2016/167570
- WO-A1-2016/171445
- US-A1- 2014 098 761
- US-A1- 2015 016 312
- US-A1- 2015 271 686

## Description

### BACKGROUND:

### Field:

Embodiments of the invention generally relate to wireless or mobile communications networks, such as, but not limited to, the Universal Mobile Telecommunications System (UMTS) Terrestrial Radio Access Network (UTRAN), Long Term Evolution (LTE) Evolved UTRAN (E-UTRAN), LTE-Advanced (LTE-A), future 5G radio access technology, and/or High Speed Packet Access (HSPA). In particular, some embodiments may relate to machine type communications (MTC).

### Description of the Related Art:

Universal Mobile Telecommunications System (UMTS) Terrestrial Radio Access Network (UTRAN) refers to a communications network including base stations, or Node Bs, and for example radio network controllers (RNC). UTRAN allows for connectivity between the user equipment (UE) and the core network. The RNC provides control functionalities for one or more Node Bs. The RNC and its corresponding Node Bs are called the Radio Network Subsystem (RNS). In case of E-UTRAN (enhanced UTRAN), no RNC exists and radio access functionality is provided in the enhanced Node B (eNodeB or eNB) or many eNBs. Multiple eNBs can be involved for a single UE connection, for example, in case of Coordinated Multipoint Transmission (CoMP) and in dual connectivity.

Long Term Evolution (LTE) or E-UTRAN provides a new radio access technology and refers to the improvements of UMTS through improved efficiency and services, lower costs, and use of new spectrum opportunities. In particular, LTE is a 3GPP standard that provides for uplink peak rates of at least, for example, 75 megabits per second (Mbps) per carrier and downlink peak rates of at least, for example, 300 Mbps per carrier. LTE supports scalable carrier bandwidths from 20 MHz down to 1.4 MHz and supports both Frequency Division Duplexing (FDD) and Time Division Duplexing (TDD).

As mentioned above, LTE may also improve spectral efficiency in networks, allowing carriers to provide more data and voice services over a given bandwidth. Therefore, LTE is designed to fulfill the needs for high-speed data and media transport in addition to high-capacity voice support. Advantages of LTE include, for example, high throughput, low latency, FDD and TDD support in the same platform, an improved end-user experience, and a simple architecture resulting in low operating costs.

Certain releases of 3GPP LTE (e.g., LTE Rel-10, LTE Rel-11, LTE Rel-12, LTE Rel-13) are targeted towards international mobile telecommunications advanced (IMT-A) systems, referred to herein for convenience simply as LTE-Advanced (LTE-A).

LTE-A is directed toward extending and optimizing the 3GPP LTE radio access technologies. A goal of LTE-A is to provide significantly enhanced services by means of higher data rates and lower latency with reduced cost. LTE-A is a more optimized radio system fulfilling the international telecommunication union-radio (ITU-R) requirements for IMT-Advanced while keeping the backward compatibility. One of the key features of LTE-A, introduced in LTE Rel-10, is carrier aggregation, which allows for increasing the data rates through aggregation of two or more LTE carriers, e.g., to the transmission bandwidth of up to 100 MHz. LTE-A in later releases may include even wider bandwidths as specified so far. Further, aggregating or interworking on the radio access level with the wireless LAN (WLAN) access network is foreseen.

US 2014/0098761 A1 discloses a method and apparatus for a low cost machine-type-communication (LC-MTC) wireless transmit/receive unit (WTRU) to enhance coverage. An example method for physical broadcast channel (PBCH) enhancement includes receiving system information on an enhanced PBCH (ePBCH). The ePBCH is located in a set of radio frames which is a subset of available radio frames, where the subset includes fewer than all the available radio frames.

US 2015/016312 A1 discloses methods and apparatus for a User Equipment (UE) and a base station in communication with each other to determine parameters for a Random Access (RA) process. The base station informs the UE through a System Information Block (SIB) of a number of resource sets for RA preamble transmission by the UE. Each resource set is associated with a number of repetitions for a RA preamble transmission, with a maximum number of RA preamble transmissions, and with a number of repetitions the base station transmits a response to a RA preamble reception.

### BRIEF DESCRIPTION OF THE DRAWINGS:

For proper understanding of the invention, reference should be made to the accompanying drawings, wherein:
Fig. 1 illustrates a signalling diagram according to one embodiment of the invention;
Fig. 2a illustrates a block diagram of an apparatus, according to an embodiment;
Fig. 2b illustrates a block diagram of an apparatus, according to another embodiment;
Fig. 3a illustrates an example flow diagram of a method, according to one embodiment;
Fig. 3b illustrates an example flow diagram of a method, according to another embodiment;
Fig. 4a illustrates a block diagram of an apparatus, according to another embodiment; and
Fig. 4b illustrates a block diagram of an apparatus, according to another embodiment.

### DETAILED DESCRIPTION:

The present invention is defined by the independent claims. Further embodiments are disclosed in the dependent claims. It will be readily understood that the components of the invention, as generally described and illustrated in the figures herein, may be arranged and designed in a wide variety of different configurations. Thus, the following detailed description of embodiments of systems, methods, apparatuses, and computer program products for paging of UE(s), as represented in the attached figures, is not intended to limit the scope of the invention, but is merely representative of some selected embodiments of the invention.

The features, structures, or characteristics of the invention described throughout this specification may be combined in any suitable manner in one or more embodiments. For example, the usage of the phrases "certain embodiments," "some embodiments," or other similar language, throughout this specification refers to the fact that a particular feature, structure, or characteristic described in connection with the embodiment may be included in at least one embodiment of the present invention. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more embodiments.

Additionally, if desired, the different functions discussed below may be performed in a different order and/or concurrently with each other. Furthermore, if desired, one or more of the described functions may be optional or may be combined. As such, the following description should be considered as merely illustrative of the principles, teachings and embodiments of this invention, and not in limitation thereof.

Some embodiments of the invention relate to the Rel-13 low complexity (LC) / enhanced coverage (EC) machine type communications (MTC) Work Item (RP-140492) of 3GPP. This work item is for further LTE physical layer enhancements for MTC. A Rel-13 MTC UE only needs to support 1.4MHz (i.e., only 6 physical resource block (PRB) pairs) radio frequency (RF) bandwidth in downlink and uplink within any system bandwidth.

The Rel-13 MTC study is targeted to specifying techniques that can achieve 15dB coverage improvement for FDD, for the use cases where MTC devices are deployed in challenging locations, such as deep inside buildings. These techniques may include, but are not limited to, for example, subframe bundling techniques with hybrid automatic repeat request (HARQ) for physical data channels, resource allocation using enhanced physical downlink control channel (EPDCCH) with cross-subframe scheduling with repetition and so on. The amount of coverage enhancement may be configured per cell and/or per UE and/or per channel and/or group of channels. The Rel-13 MTC study also is targeted to provide power consumption reduction schemes, both in normal coverage and enhanced coverage, to target ultra-long battery life.

In the last 3GPP RANI meeting, it was agreed that two coverage enhancement (CE) modes (i.e., CE Mode A and CE Mode B) will be specified for RRC_CONNECTED UEs and CE mode will be explicitly configured to the UE. CE Mode A describes a set of behaviors for no repetitions and small number of repetitions, while CE Mode B describes a set of behaviors for large number of repetitions. A main motivation for defining these two CE modes is to have some restriction applied for UEs in deep enhanced coverage including limited mobility function (e.g., no measurement report and network-controlled handover procedure), no or limited channel quality indicator (CQI) feedback, etc., while keeping some normal procedures for shallow enhanced coverage UEs. Although eNB configuring CE mode has been agreed, it is not clear based on what information the eNB makes the decision to configure the CE mode and what kind of UE action is needed to assist that decision.

3GPP introduced the CE level concept for the random access (RA) procedure, and in RAN2#90 meeting, the following agreements were made: In system information block (SIB) the eNB provides a set of physical random access channel (PRACH) resources (e.g., time, frequency, and preamble) each associated with a coverage enhancement level (including LC in normal coverage).

Embodiments of the invention provide mechanisms enabling a network to control the CE mode of the UE. Embodiments include, for example, mechanisms for configuration, measurements, and reporting.

### Configuration

In one embodiment, the network may configure CE mode(s) for a UE including, for example, the following information: mode(s), criteria for entering/changing the mode, and/or criteria for utilizing a certain repetition pattern. Thus, in an embodiment, the configuration of the CE mode(s) may include specifying the mode(s), the criteria for entering/changing the mode, and/or criteria for utilizing a certain repetition pattern.

According to an embodiment, the mode(s) may include: (1) Normal mode; (2) Mode A in which repetition choices {e.g., R1, R2, R3} may be configured or predefined in the standards; and/or Mode B in which repetition choices {e.g., R4, R5, R6} may be configured or predefined in the standards. In certain embodiments, the network may configure a UE with one, two, three or any combination of the modes.

In an embodiment, the criteria for entering/changing the mode may include, for example: (1) Reference signal received power (RSRP) / reference signal received quality (RSRQ) thresholds corresponding to different (CE) mode; (2) Hysteresis/offset values (in dB) -- optionally individual values corresponding to different (CE) modes; (3) Settling time during which the criteria needs to be met for changing the modetime value may be coverage mode specific, for example, separate timer values for each level or time value is scaled (multiplied/divided/added etc.) according to certain coverage level; and/or (4) Report signalling configuration.

According to an embodiment, the network may include, in the configuration of the UE, criteria for utilizing a certain repetition pattern-these criteria may be similar to the criteria for entering/changing the mode discussed above. It is noted that the CE mode criteria may be added as additional parameters in existing measurement configuration or added as an individual EC specific configuration.

### Measurements

According to one embodiment, a UE may evaluate the results of the measurements it performs according to the configured criteria for entering/changing the mode and/or repetitions. This evaluation may include settling time, i.e., the criteria for changing the mode is met if all the measurement results are above/below threshold during this settling time. This is beneficial for accommodating fluctuating radio conditions. The evaluation may also include hysteresis value on the measurement results to avoid ping-pong between coverage modes.

### Reporting

In an embodiment, a UE reports CE mode changes (e.g., with PHY, MAC or RRC signalling), for example, as follows:
a. Random access channel (RACH): UE triggers RA procedure by selecting PRACH resources according to the triggering RSRP thresholds; or
b. Medium access control control element (MAC CE): introduce new MAC CE for coverage enhancement (CE) mode change report (it is noted that the "CE" in "MAC CE" refers to control element, while the "CE" in "CE mode" or "CE level" refers to coverage enhancement); or
c. Configurable by eNB (e.g. either RACH or MAC CE); or
d. The UE reports the entered mode i.e. normal, mode A or mode B; or
e. The UE reports the selected repetition pattern, i.e., R1, R2... R6; or
f. The UE reports the entered / used CE mode if the UE detects that eNB is utilizing different CE mode / repetitions than the UE has determined from the coverage mode specific RSRP/RSRQ criteria. The UE can determine the mismatch between CE modes from number of repetitions, i.e., repetitions are CE level specific

According to one embodiment, when the RACH is configured for reporting the CE mode change, one indication may be added in C-RNTI MAC CE (in message 3 of the RA procedure) to distinguish the new RA trigger event from other events, e.g., the RA procedure when user data arrives for a UE loosing UL synchronization or without SR resources. With this indication, the eNB may not perform additional RRC reconfiguration procedure for configuring the UL PUCCH resource to reduce the signaling overhead.

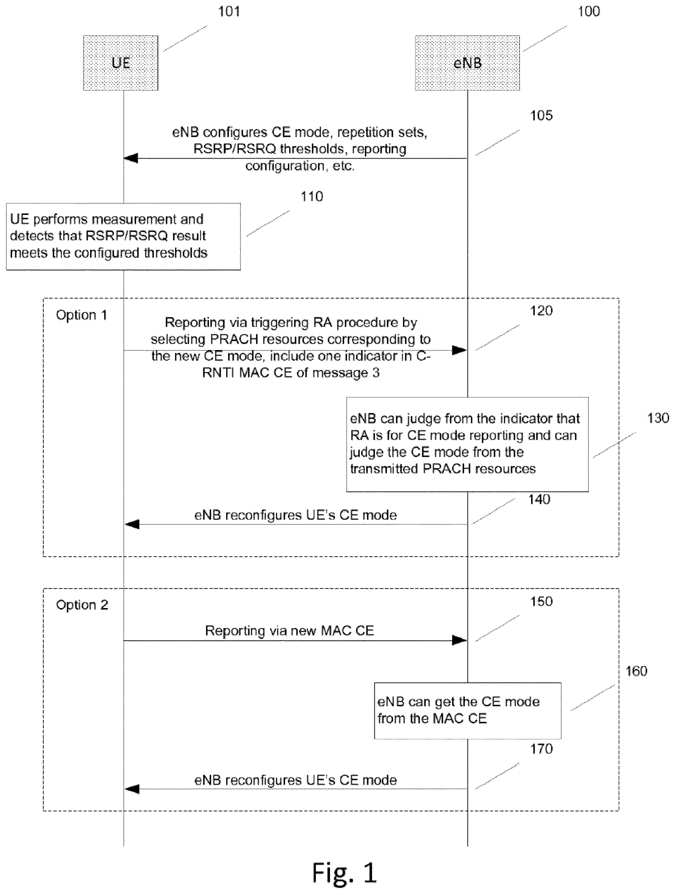

Fig. 1 illustrates an example signaling diagram depicting the operation and communication between the UE and eNB, according to one embodiment. As illustrated in Fig. 1, at step 105, the eNB 100 may configure, for UE 101, CE mode, repetition sets, RSRP/RSRQ thresholds, reporting configuration, etc. At step 110, the UE 101 may perform measurement and detect whether RSRP/RSRQ result meets the configured thresholds.

Continuing with Fig. 1, according to Option 1, the UE 101, at step 120, may report via triggering RA procedure by selecting PRACH resources corresponding to the new CE mode and including one indicator in cell radio network temporary identifier (C-RNTI) MAC CE of message 3. At step 130, the eNB 100 may judge from the indicator that RA is for CE mode reporting and may judge the CE mode from the transmitted PRACH resources. Then, at step 140, the eNB 100 may reconfigure the CE mode of UE 101.

According to option 2 of Fig. 1, at step 150, the UE 101 may report CE mode change via new MAC CE to eNB 100. At step 160, the eNB 100 may obtain the CE mode from the MAC CE. Then, at step 170, the eNB 100 may reconfigure the CE mode of UE 101.

For reporting signaling, if the trigger for detecting the change is set early enough (e.g., in the direction of CE mode A to CE mode B), the UE may still send a MAC CE in uplink and with enough repetitions so that the eNB could receive the MAC CE correctly. With another trigger, RACH may need to be used. In general, reporting via RACH is suitable for both directions of CE mode change. Since the eNB configures the trigger criteria, the eNB may also decide which way to go.

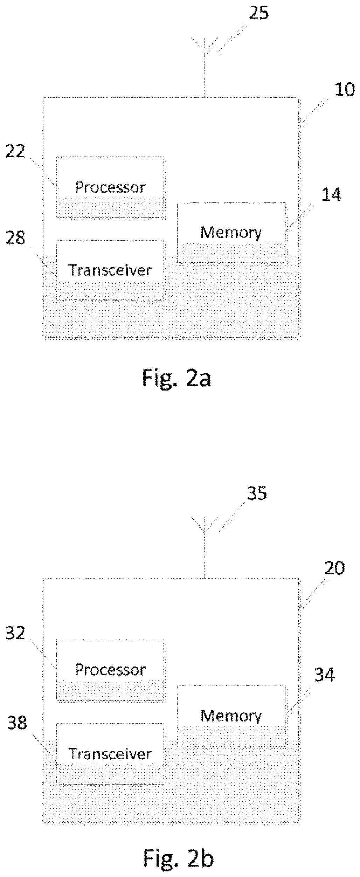

Fig. 2a illustrates an example of an apparatus 10 according to an embodiment. In an embodiment, apparatus 10 may be a node, host, or server in a communications network or serving such a network. For example, in certain embodiments, apparatus 10 may be a network access node or network entity for a radio access network, such as LTE or LTE-A. Thus, in certain embodiments, apparatus 10 may be a base station or eNB. However, in other embodiments, apparatus 10 may be other components within a radio access network. It should be noted that one of ordinary skill in the art would understand that apparatus 10 may include components or features not shown in Fig. 2a.

As illustrated in Fig. 2a, apparatus 10 includes a processor 22 for processing information and executing instructions or operations. Processor 22 may be any type of general or specific purpose processor. While a single processor 22 is shown in Fig. 2a, multiple processors may be utilized according to other embodiments. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples.

Apparatus 10 may further include or be coupled to a memory 14 (internal or external), which may be coupled to processor 22, for storing information and instructions that may be executed by processor 22. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and removable memory. For example, memory 14 can be comprised of any combination of random access memory (RAM), read only memory (ROM), static storage such as a magnetic or optical disk, or any other type of non-transitory machine or computer readable media. The instructions stored in memory 14 may include program instructions or computer program code that, when executed by processor 22, enable the apparatus 10 to perform tasks as described herein.

In some embodiments, apparatus 10 may also include or be coupled to one or more antennas 25 for transmitting and receiving signals and/or data to and from apparatus 10. Apparatus 10 may further include or be coupled to a transceiver 28 configured to transmit and receive information. For instance, transceiver 28 may be configured to modulate information on to a carrier waveform for transmission by the antenna(s) 25 and demodulate information received via the antenna(s) 25 for further processing by other elements of apparatus 10. In other embodiments, transceiver 28 may be capable of transmitting and receiving signals or data directly.

Processor 22 may perform functions associated with the operation of apparatus 10 which may include, for example, precoding of antenna gain/phase parameters, encoding and decoding of individual bits forming a communication message, formatting of information, and overall control of the apparatus 10, including processes related to management of communication resources.

In an embodiment, memory 14 may store software modules that provide functionality when executed by processor 22. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

In one embodiment, apparatus 10 may be a network node or network entity, such as a base station or eNB, for example. According to certain embodiments, apparatus 10 may be controlled by memory 14 and processor 22 to configure a UE with CE mode, criteria for entering or changing the CE mode, and/or criteria for utilizing a certain repetition pattern. According to an embodiment, the CE mode may include normal mode, Mode A, or Mode B.

In one embodiment, the criteria for entering or changing the CE mode may, for example, include: RSRP/RSRQ thresholds corresponding to different (CE) mode, hysteresis/offset values (optionally individual values corresponding to different (CE) modes), settling time during which the criteria needs to be met for changing the mode (time value could be coverage mode specific-for example separate timer values for each level or time value may be scaled (multiplied/divided/added etc.) according to certain coverage level), and report signaling configuration.

According to an embodiment, apparatus 10 may also be controlled by memory 14 and processor 22 to receive a report, from the UE, comprising an indication of CE mode change(s). In one embodiment, the report of the CE mode change may be received via UE triggered RA procedure including an indicator in C-RNTI MAC CE. According to certain embodiments, apparatus 10 may be controlled by memory 14 and processor 22 to determine from the indicator that RA is for CE mode reporting and to determine the CE mode from the transmitted PRACH resources.

According to another embodiment, the report of the CE mode change may be received via new MAC CE. In this embodiment, apparatus 10 may be controlled by memory 14 and processor 22 to obtain the CE mode from the MAC CE.

In an embodiment, apparatus 10 may also be controlled by memory 14 and processor 22 to reconfigure the UE's CE mode.

Fig. 2b illustrates an example of an apparatus 20 according to another embodiment. In an embodiment, apparatus 20 may be a node or element in a communications network or associated with such a network, such as a UE, mobile device, mobile unit, or other device. For instance, in some embodiments, apparatus 20 may be UE in LTE or LTE-A. It should be noted that one of ordinary skill in the art would understand that apparatus 20 may include components or features not shown in Fig. 2b.

As illustrated in Fig. 2b, apparatus 20 includes a processor 32 for processing information and executing instructions or operations. Processor 32 may be any type of general or specific purpose processor. While a single processor 32 is shown in Fig. 2b, multiple processors may be utilized according to other embodiments. In fact, processor 32 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples.

Apparatus 20 may further include or be coupled to a memory 34 (internal or external), which may be coupled to processor 32, for storing information and instructions that may be executed by processor 32. Memory 34 may be one or more memories and of any type suitable to the local application environment, and may be implemented using any suitable volatile or nonvolatile data storage technology such as a semiconductor-based memory device, a magnetic memory device and system, an optical memory device and system, fixed memory, and removable memory. For example, memory 34 can be comprised of any combination of random access memory (RAM), read only memory (ROM), static storage such as a magnetic or optical disk, or any other type of non-transitory machine or computer readable media. The instructions stored in memory 34 may include program instructions or computer program code that, when executed by processor 32, enable the apparatus 20 to perform tasks as described herein.

In some embodiments, apparatus 20 may also include or be coupled to one or more antennas 35 for transmitting and receiving signals and/or data to and from apparatus 20. Apparatus 20 may further include a transceiver 38 configured to transmit and receive information. For instance, transceiver 38 may be configured to modulate information on to a carrier waveform for transmission by the antenna(s) 35 and demodulate information received via the antenna(s) 35 for further processing by other elements of apparatus 20. In other embodiments, transceiver 38 may be capable of transmitting and receiving signals or data directly.

Processor 32 may perform functions associated with the operation of apparatus 20 including, without limitation, precoding of antenna gain/phase parameters, encoding and decoding of individual bits forming a communication message, formatting of information, and overall control of the apparatus 20, including processes related to management of communication resources.

In an embodiment, memory 34 stores software modules that provide functionality when executed by processor 32. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software.
As mentioned above, according to one embodiment, apparatus 20 may be a mobile device, such as a UE in LTE or LTE-A. According to an embodiment, apparatus 20 may be controlled by memory 34 and processor 32 to receive configuration of CE mode, criteria for entering or changing the CE mode, and/or criteria for utilizing a certain repetition pattern. According to an embodiment, the CE mode may include normal mode, Mode A, or Mode B.

In one embodiment, the criteria for entering or changing the CE mode may, for example, include: RSRP/RSRQ thresholds corresponding to different (CE) mode, hysteresis/offset values (optionally individual values corresponding to different (CE) modes), settling time during which the criteria needs to be met for changing the mode (time value could be coverage mode specific-for example separate timer values for each level or time value may be scaled (multiplied/divided/added etc.) according to certain coverage level), and report signaling configuration.

In one embodiment, apparatus 20 may be controlled by memory 34 and processor 32 to perform measurement and detect whether the results of the measurement meet the criteria for entering/changing the mode and the criteria for utilizing the certain repetition pattern. According to an embodiment, the criteria for entering/changing the mode may be met if all the measurement results are above/below threshold during a settling time.

According to an embodiment, apparatus 20 may then be controlled by memory 34 and processor 32 to transmit a report comprising an indication of CE mode change(s). In one embodiment, the report of the CE mode change may be transmitted via a RA procedure triggered by apparatus 20 and including an indicator in C-RNTI MAC CE. In another embodiment, the report of the CE mode change may be transmitted via new MAC CE. In an embodiment, apparatus 20 may also be controlled by memory 34 and processor 32 to receive a reconfiguration of the CE mode of apparatus 20.

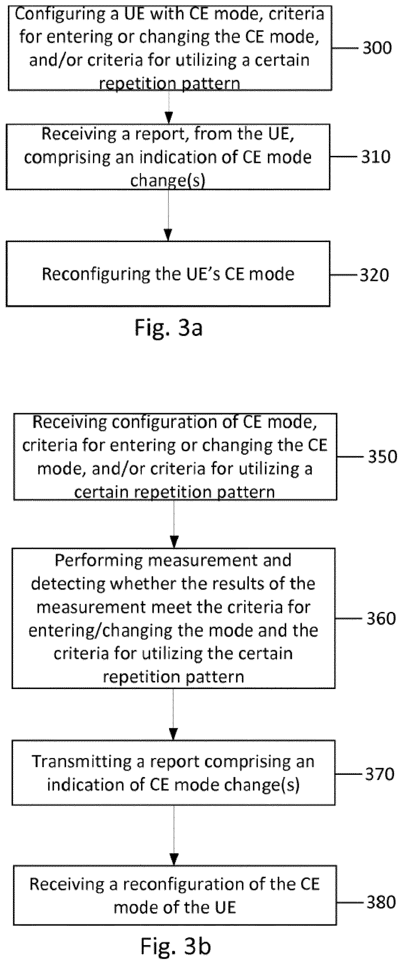

Fig. 3a illustrates an example flow diagram of a method, according to one embodiment. In certain embodiments, the method of Fig. 3a may be performed by a network node, such as a base station or eNB, for example. As illustrated in Fig. 3a, the method may include, at 300, configuring a UE with CE mode, criteria for entering or changing the CE mode, and/or criteria for utilizing a certain repetition pattern. According to an embodiment, the CE mode may include normal mode, Mode A, or Mode B.

In one embodiment, the criteria for entering or changing the CE mode may, for example, include: RSRP/RSRQ thresholds corresponding to different (CE) mode, hysteresis/offset values (optionally individual values corresponding to different (CE) modes), settling time during which the criteria needs to be met for changing the mode (time value could be coverage mode specific-for example separate timer values for each level or time value may be scaled (multiplied/divided/added etc.) according to certain coverage level), and report signaling configuration.

According to an embodiment, as illustrated in Fig. 3a, the method may also include, at 310, receiving a report, from the UE, comprising an indication of CE mode change(s). In one embodiment, the receiving may include receiving the report of the CE mode change via UE triggered RA procedure including an indicator in C-RNTI MAC CE. According to certain embodiments, the method may also include determining from the indicator that RA is for CE mode reporting and to determine the CE mode from the transmitted PRACH resources.

According to another embodiment, the receiving may include receiving the report of the CE mode change via new MAC CE. In this embodiment, the method may include obtaining the CE mode from the MAC CE. In an embodiment, the method may also include, at 320, reconfiguring the UE's CE mode.

Fig. 3b illustrates an example flow diagram of a method, according to one embodiment. In certain embodiments, the method of Fig. 3b may be performed by a network node, such as a UE or mobile device, for example. As illustrated in Fig. 3b, the method may include, at 350, receiving configuration of CE mode, criteria for entering or changing the CE mode, and/or criteria for utilizing a certain repetition pattern. According to an embodiment, the CE mode may include normal mode, Mode A, or Mode B.

In one embodiment, the criteria for entering or changing the CE mode may, for example, include: RSRP/RSRQ thresholds corresponding to different (CE) mode, hysteresis/offset values (optionally individual values corresponding to different (CE) modes), settling time during which the criteria needs to be met for changing the mode (time value could be coverage mode specific-for example separate timer values for each level or time value may be scaled (multiplied/divided/added etc.) according to certain coverage level), and report signaling configuration.

In one embodiment, as illustrated in Fig. 3b, the method may include, at 360, performing measurement and detecting whether the results of the measurement meet the criteria for entering/changing the mode and the criteria for utilizing the certain repetition pattern. According to an embodiment, the criteria for entering/changing the mode may be met if all the measurement results are above/below threshold during a settling time.

According to an embodiment, the method may include, at 370, transmitting a report comprising an indication of CE mode change(s). In one embodiment, the transmitting may include transmitting the report of the CE mode change via a RA procedure triggered by the UE and including an indicator in C-RNTI MAC CE. In another embodiment, the transmitting may include transmitting the report of the CE mode change via new MAC CE. In an embodiment, the method may also include, at 380, receiving a reconfiguration of the CE mode of the UE.

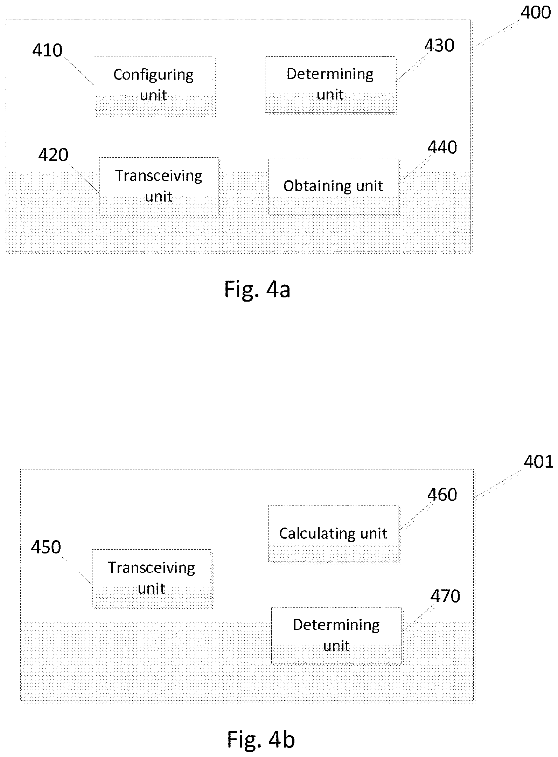

Fig. 4a illustrates a block diagram of an apparatus 400, according to another embodiment. As illustrated in Fig. 4a, apparatus 400 may include a configuring unit 410 and a transceiving unit 420. In one embodiment, configuring unit 410 may configure a UE with CE mode, criteria for entering or changing the CE mode, and/or criteria for utilizing a certain repetition pattern. According to an embodiment, the CE mode may include normal mode, Mode A, or Mode B.

Transceiving unit 420 may receive a report, from the UE, comprising an indication of CE mode change(s). In one embodiment, the transceiving unit 420 may receive the report of the CE mode change via UE triggered RA procedure including an indicator in C-RNTI MAC CE. According to certain embodiments, a determining unit 430 may determine from the indicator that RA is for CE mode reporting and determine the CE mode from the transmitted PRACH resources.

According to another embodiment, the transceiving unit 420 may receive the report of the CE mode change via new MAC CE. In this embodiment, apparatus 400 may include an obtaining unit 440 that may obtain the CE mode from the MAC CE. In an embodiment, the configuring unit 410 may reconfigure the UE's CE mode.

Fig. 4b illustrates a block diagram of an apparatus 401, according to another embodiment. As illustrated in Fig. 4b, apparatus 401 may include a a transceiving unit 450, calculating unit 460, and determining unit 470. In one embodiment, transceiving unit 450 may receive configuration of CE mode, criteria for entering or changing the CE mode, and/or criteria for utilizing a certain repetition pattern. According to an embodiment, the CE mode may include normal mode, Mode A, or Mode B.

In one embodiment, calculating unit 460 may perform measurement and determining unit 470 may determine whether the results of the measurement meet the criteria for entering/changing the mode and the criteria for utilizing the certain repetition pattern. According to an embodiment, the criteria for entering/changing the mode may be met if all the measurement results are above/below threshold during a settling time.

According to an embodiment, trasceiving unit 450 may transmit a report comprising an indication of CE mode change(s). In one embodiment, trasceiving unit 450 may transmit the report of the CE mode change via a RA procedure triggered by the UE and including an indicator in C-RNTI MAC CE. In another embodiment, trasceiving unit 450 may transmit the report of the CE mode change via new MAC CE. In an embodiment, trasceiving unit 450 may also receive a reconfiguration of the CE mode of the UE.

According to embodiments, programs, also called program products or computer programs, including software routines, applets and macros, may be stored in any apparatus-readable data storage medium and they include program instructions to perform particular tasks. A computer program product may comprise one or more computer-executable components which, when the program is run, are configured to carry out embodiments. The one or more computer-executable components may be at least one software code or portions of it. Modifications and configurations required for implementing functionality of an embodiment may be performed as routine(s), which may be implemented as added or updated software routine(s). Software routine(s) may be downloaded into the apparatus.

Software or a computer program code or portions of it may be in a source code form, object code form, or in some intermediate form, and it may be stored in some sort of carrier, distribution medium, or computer readable medium, which may be any entity or device capable of carrying the program. Such carriers include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other embodiments, the functionality of any method or apparatus described herein may be performed by hardware, for example through the use of an application specific integrated circuit (ASIC), a programmable gate array (PGA), a field programmable gate array (FPGA), or any other combination of hardware and software. In yet another embodiment, the functionality may be implemented as a signal, a non-tangible means that may be carried by an electromagnetic signal downloaded from the Internet or other network.

According to an embodiment, an apparatus, such as a node, device, or a corresponding component, may be configured as a computer or a microprocessor, such as single-chip computer element, or as a chipset, including at least a memory for providing storage capacity used for arithmetic operation and an operation processor for executing the arithmetic operation.

One embodiment is directed to a method that may include configuring a UE with CE mode, criteria for entering or changing the CE mode, and/or criteria for utilizing a certain repetition pattern. The method may also include receiving a report, from the UE, comprising an indication of CE mode change(s). In one embodiment, the receiving may include receiving the report of the CE mode change via UE triggered RA procedure including an indicator in C-RNTI MAC CE. According to certain embodiments, the method may also include determining from the indicator that RA is for CE mode reporting and to determine the CE mode from the transmitted PRACH resources.

According to another embodiment, the receiving may include receiving the report of the CE mode change via new MAC CE. In this embodiment, the method may include obtaining the CE mode from the MAC CE. In an embodiment, the method may also include reconfiguring the UE's CE mode.

Another embodiment is directed to an apparatus that may include configuring means for configuring a UE with CE mode, criteria for entering or changing the CE mode, and/or criteria for utilizing a certain repetition pattern. The apparatus may also include receiving means for receiving a report, from the UE, comprising an indication of CE mode change(s). In one embodiment, the receiving means may include means for receiving the report of the CE mode change via UE triggered RA procedure including an indicator in C-RNTI MAC CE. According to certain embodiments, the apparatus may also include determining means for determining from the indicator that RA is for CE mode reporting and determining the CE mode from the transmitted PRACH resources.

According to another embodiment, the receiving means may include means for receiving the report of the CE mode change via new MAC CE. In this embodiment, the apparatus may include obtaining means for obtaining the CE mode from the MAC CE. In an embodiment, the apparatus may also include reconfiguring means for reconfiguring the UE's CE mode.

Another embodiment is directed to a method that may include receiving configuration of CE mode, criteria for entering or changing the CE mode, and/or criteria for utilizing a certain repetition pattern. The method may also include performing measurement and detecting whether the results of the measurement meet the criteria for entering/changing the mode and the criteria for utilizing the certain repetition pattern. According to an embodiment, the method may include transmitting a report comprising an indication of CE mode change(s). In one embodiment, the transmitting may include transmitting the report of the CE mode change via a RA procedure triggered by the UE and including an indicator in C-RNTI MAC CE. In another embodiment, the transmitting may include transmitting the report of the CE mode change via new MAC CE. In an embodiment, the method may also include receiving a reconfiguration of the CE mode of the UE.

Another embodiment is directed to an apparatus that may include receiving means for receiving configuration of CE mode, criteria for entering or changing the CE mode, and/or criteria for utilizing a certain repetition pattern. The apparatus may also include performing means for performing measurement and detecting means for detecting whether the results of the measurement meet the criteria for entering/changing the mode and the criteria for utilizing the certain repetition pattern. According to an embodiment, the apparatus may include transmitting means for transmitting a report comprising an indication of CE mode change(s). In one embodiment, the transmitting means may include means for transmitting the report of the CE mode change via a RA procedure triggered by the UE and including an indicator in C-RNTI MAC CE. In another embodiment, the transmitting means may include means for transmitting the report of the CE mode change via new MAC CE. In an embodiment, the apparatus may also include receiving means for receiving a reconfiguration of the CE mode of the UE.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the scope of the invention, which is given by the claims.

## Claims

1. An apparatus in a network entity, comprising:
configuring means (300) for configuring a user equipment with: a coverage enhancement mode, criteria for entering or changing the coverage enhancement mode, and criteria for utilizing a certain repetition pattern, the criteria for entering or changing the coverage enhancement mode comprising a settling time, wherein the criteria needs to be met for the duration of the settling time if the coverage enhancement mode is to be entered or changed; and
receiving means (310) for receiving a report from the user equipment via radio resource control signalling,
wherein the report comprises an indication of a coverage enhancement mode change.

2. The apparatus according to claim 1, further comprising:
determining means for determining from the indicator that random access is for coverage enhancement mode reporting and determining the coverage enhancement mode from the transmitted physical random access channel resources.

3. The apparatus according to claim 1 or 2, further comprising:
reconfiguring means (320) for reconfiguring the user equipment's coverage enhancement mode.

4. An apparatus in a user equipment, comprising:
receiving means (350) for receiving configuration of a coverage enhancement mode, criteria for entering or changing the coverage enhancement mode, and criteria for utilizing a certain repetition pattern, the criteria for entering or changing the coverage enhancement mode comprising a settling time, wherein the criteria needs to be met for the duration of the settling time if the coverage enhancement mode is to be entered or changed;
performing means (360) for performing measurement and detecting means for detecting whether the results of the measurement meet the configured criteria; and
transmitting means (370) for transmitting a report comprising an indication of a coverage enhancement mode change via radio resource control signalling.

5. The apparatus according to claim 4, further comprising:
receiving means (380) for receiving a reconfiguration of the coverage enhancement mode of the user equipment.

6. A method performed by a user equipment, comprising:
receiving (350) configuration of a coverage enhancement mode, criteria for entering or changing the coverage enhancement mode, and criteria for utilizing a certain repetition pattern, the criteria for entering or changing the coverage enhancement mode comprising a settling time, wherein the criteria needs to be met for the duration of the settling time if the coverage enhancement mode is to be entered or changed;
performing (360) measurement and detecting whether the results of the measurement meet the configured criteria; and
transmitting (370) a report comprising an indication of a coverage enhancement mode change via radio resource control signalling.

7. The method according to claim 6, further comprising:
receiving (380) a reconfiguration of the coverage enhancement mode of the user equipment.

8. A method performed by a network entity, comprising:
configuring a user equipment with: a coverage enhancement mode, criteria for entering or changing the coverage enhancement mode, and criteria for utilizing a certain repetition pattern, the criteria for entering or changing the coverage enhancement mode comprising a settling time, wherein the criteria needs to be met for the duration of the settling time if the coverage enhancement mode is to be entered or changed; and
receiving a report from the user equipment via radio resource control signalling,
wherein the report comprises an indication of a coverage enhancement mode change.

9. The method according to claim 8, comprising:
determining from the indicator that random access is for coverage enhancement mode reporting and determining the coverage enhancement mode from the transmitted physical random access channel resources.

10. The method according to claim 8 or claim 9, comprising:
reconfiguring the user equipment's coverage enhancement mode.

## Patentansprüche

1. Vorrichtung in einer Netzwerkeinheit, umfassend:
Konfigurationsmittel (300) zum Konfigurieren eines Endgerätes mit: einem Modus zur Verbesserung der Abdeckung, Kriterien für das Eingeben oder Ändern des Modus zur Verbesserung der Abdeckung und Kriterien für das Nutzen eines bestimmten Wiederholungsmusters, wobei die Kriterien für das Eingeben oder Ändern des Modus zur Verbesserung der Abdeckung eine Stabilisierungszeit umfassen, wobei die Kriterien für die Dauer der Stabilisierungszeit erfüllt werden müssen, wenn der Modus zur Verbesserung der Abdeckung eingegeben oder geändert werden soll; und
Empfangsmittel (310) zum Empfangen eines Berichts von dem Endgerät über Funkressourcen-Steuersignalübertragung,
wobei der Bericht eine Angabe über eine Änderung des Modus zur Verbesserung der Abdeckung umfasst.

2. Vorrichtung nach Anspruch 1, die weiter umfasst:
Bestimmungsmittel zum Bestimmen, ausgehend von dem Indikator, dass Direktzugriff für die Berichterstattung des Modus zur Verbesserung der Abdeckung gilt, und Bestimmen des Modus zur Verbesserung der Abdeckung aus den übertragenen physikalischen Direktzugriffs-Kanalressourcen.

3. Vorrichtung nach Anspruch 1 oder 2, die weiter umfasst:
Neukonfigurationsmittel (320) zum Neukonfigurieren des Modus zur Verbesserung der Abdeckung des Endgerätes.

4. Vorrichtung in einem Endgerät, umfassend:
Empfangsmittel (350) zum Empfangen der Konfiguration eines Modus zur Verbesserung der Abdeckung, Kriterien für das Eingeben oder Ändern des Modus zur Verbesserung der Abdeckung und Kriterien für das Nutzen eines bestimmten Wiederholungsmusters, wobei die Kriterien für das Eingeben oder Ändern des Modus zur Verbesserung der Abdeckung eine Stabilisierungszeit umfassen, wobei die Kriterien für die Dauer der Stabilisierungszeit erfüllt werden müssen, wenn der Modus zur Verbesserung der Abdeckung eingegeben oder geändert werden soll;
Durchführungsmittel (360) zum Durchführen von Messungen und Erkennungsmittel zum Erkennen, ob die Ergebnisse der Messung die konfigurierten Kriterien erfüllen; und
Übertragungsmittel (370) zum Übertragen eines Berichts, der eine Angabe über eine Änderung des Modus zur Verbesserung der Abdeckung über Funkressourcen-Steuersignalübertragung umfasst.

5. Vorrichtung nach Anspruch 4, die weiter umfasst:
Empfangsmittel (380) zum Empfangen einer Neukonfiguration des Modus zur Verbesserung der Abdeckung des Endgerätes.

6. Verfahren, das von einem Endgerät durchgeführt wird, umfassend:
Empfangen (350) der Konfiguration eines Modus zur Verbesserung der Abdeckung, Kriterien für das Eingeben oder Ändern des Modus zur Verbesserung der Abdeckung und Kriterien für das Nutzen eines bestimmten Wiederholungsmusters, wobei die Kriterien für das Eingeben oder Ändern des Modus zur Verbesserung der Abdeckung eine Stabilisierungszeit umfassen, wobei die Kriterien für die Dauer der Stabilisierungszeit erfüllt werden müssen, wenn der Modus zur Verbesserung der Abdeckung eingegeben oder geändert werden soll;
Durchführen (360) einer Messung und Erkennen, ob die Ergebnisse der Messung die konfigurierten Kriterien erfüllen; und
Übertragen (370) eines Berichts, der eine Angabe über eine Änderung des Modus zur Verbesserung der Abdeckung über Funkressourcen-Steuersignalübertragung umfasst.

7. Verfahren nach Anspruch 6, das weiter umfasst:
Empfangen (380) einer Neukonfiguration des Modus zur Verbesserung der Abdeckung des Endgerätes.

8. Verfahren, das von einer Netzwerkeinheit durchgeführt wird, umfassend:
Konfigurieren eines Endgerätes mit: einem Modus zur Verbesserung der Abdeckung, Kriterien für das Eingeben oder Ändern des Modus zur Verbesserung der Abdeckung und Kriterien für das Nutzen eines bestimmten Wiederholungsmusters, wobei die Kriterien für das Eingeben oder Ändern des Modus zur Verbesserung der Abdeckung eine Stabilisierungszeit umfassen, wobei die Kriterien für die Dauer der Stabilisierungszeit erfüllt werden müssen, wenn der Modus zur Verbesserung der Abdeckung eingegeben oder geändert werden soll; und
Empfangen eines Berichts von dem Endgerät über Funkressourcen-Steuersignalübertragung,
wobei der Bericht eine Angabe über eine Änderung des Modus zur Verbesserung der Abdeckung umfasst.

9. Verfahren nach Anspruch 8, umfassend:
Bestimmen, ausgehend von dem Indikator, dass Direktzugriff für die Berichterstattung des Modus zur Verbesserung der Abdeckung gilt, und Bestimmen des Modus zur Verbesserung der Abdeckung aus den übertragenen physikalischen Direktzugriffs-Kanalressourcen.

10. Verfahren nach Anspruch 8 oder Anspruch 9, umfassend: Neukonfigurieren des Modus zur Verbesserung der Abdeckung des Endgeräts.

## Revendications

1. Appareil dans une entité de réseau, comprenant :
un moyen de configuration (300) destiné à configurer un équipement d'utilisateur à l'aide de : un mode d'amélioration de couverture, des critères pour entrer dans le mode d'amélioration de couverture ou pour en changer et des critères d'utilisation d'un certain modèle de répétition, les critères pour entrer dans le mode d'amélioration de couverture ou pour en changer comprenant un temps d'établissement, dans lequel les critères doivent être satisfaits pendant la durée du temps d'établissement s'il faut entrer dans le mode d'amélioration de couverture ou en changer ; et
un moyen de réception (310) destiné à recevoir un rapport en provenance de l'équipement d'utilisateur par le biais d'une signalisation de commande de ressources radioélectriques,
dans lequel le rapport comprend une indication de changement de mode d'amélioration de couverture.

2. Appareil selon la revendication 1, comprenant en outre :
un moyen de détermination destiné à déterminer à partir de l'indicateur que l'accès aléatoire est destiné à la notification de mode d'amélioration de couverture, et à déterminer le mode d'amélioration de couverture à partir des ressources de canal physique d'accès aléatoire transmises.

3. Appareil selon la revendication 1 ou 2, comprenant en outre :
un moyen de reconfiguration (320) destiné à reconfigurer le mode d'amélioration de couverture d'équipement d'utilisateur.

4. Appareil dans un équipement d'utilisateur, comprenant :
un moyen de réception (350) destiné à recevoir la configuration d'un mode d'amélioration de couverture, des critères pour entrer dans le mode d'amélioration de couverture ou pour en changer et des critères d'utilisation d'un certain modèle de répétition, les critères pour entrer dans le mode d'amélioration de couverture ou pour en changer comprenant un temps d'établissement, dans lequel les critères doivent être satisfaits pendant la durée du temps d'établissement s'il faut entrer dans le mode d'amélioration de couverture ou en changer ;
un moyen de réalisation (360) destiné à réaliser la mesure et un moyen de détection destiné à détecter si les résultats de la mesure satisfont aux critères configurés ; et
un moyen de transmission (370) destiné à transmettre un rapport comprenant une indication de changement de mode d'amélioration de couverture par le biais d'une signalisation de commande de ressources radioélectriques.

5. Appareil selon la revendication 4, comprenant en outre :
un moyen de réception (380) destiné à recevoir une reconfiguration du mode d'amélioration de couverture de l'équipement d'utilisateur.

6. Procédé mis en œuvre par un équipement d'utilisateur, comprenant les étapes suivantes :
recevoir (350) la configuration d'un mode d'amélioration de couverture, des critères pour entrer dans le mode d'amélioration de couverture ou pour en changer et des critères d'utilisation d'un certain modèle de répétition, les critères pour entrer dans le mode d'amélioration de couverture ou pour en changer comprenant un temps d'établissement, dans lequel les critères doivent être satisfaits pendant la durée du temps d'établissement s'il faut entrer dans le mode d'amélioration de couverture ou en changer ;
réaliser (360) la mesure et détecter si les résultats de la mesure satisfont aux critères configurés ; et
transmettre (370) un rapport comprenant une indication de changement de mode d'amélioration de couverture par le biais d'une signalisation de commande de ressources radioélectriques.

7. Procédé selon la revendication 6, comprenant en outre l'étape suivante :
recevoir (380) une reconfiguration du mode d'amélioration de couverture de l'équipement d'utilisateur.

8. Procédé mis en œuvre par une entité de réseau, comprenant les étapes suivantes :
configurer un équipement d'utilisateur à l'aide de : un mode d'amélioration de couverture, des critères pour entrer dans le mode d'amélioration de couverture ou pour en changer et des critères d'utilisation d'un certain modèle de répétition, les critères pour entrer dans le mode d'amélioration de couverture ou pour en changer comprenant un temps d'établissement, dans lequel les critères doivent être satisfaits pendant la durée du temps d'établissement s'il faut entrer dans le mode d'amélioration de couverture ou en changer ; et
recevoir un rapport en provenance de l'équipement d'utilisateur par le biais d'une signalisation de commande de ressources radioélectriques,
dans lequel le rapport comprend une indication de changement de mode d'amélioration de couverture.

9. Procédé selon la revendication 8, comprenant l'étape suivante :
déterminer à partir de l'indicateur que l'accès aléatoire est destiné à la notification de mode d'amélioration de couverture, et déterminer le mode d'amélioration de couverture à partir des ressources de canal physique d'accès aléatoire transmises.

10. Procédé selon la revendication 8 ou la revendication 9, comprenant l'étape suivante :
reconfigurer le mode d'amélioration de couverture d'équipement d'utilisateur.
